# EUROPÄISCHE PATENTSCHRIFT

(11) **EP 2 845 179 B1**
(45) Veröffentlichungstag und Bekanntmachung des Hinweises auf die Patenterteilung: **03.01.2018**
(21) Anmeldenummer: 13792352.0
(22) Anmeldetag: 15.11.2013
(51) Int. Cl.: G08G 1/16, H04W 84/18, G08G 1/01, G08G 1/0967

(54) **VERFAHREN ZUR KOMMUNIKATION INNERHALB EINES NACH ART DES AD-HOC ZUSAMMENWIRKENDEN, INSBESONDERE DRAHTLOS-, KRAFTFAHRZEUGKOMMUNIKATIONSSYSTEMS, EINRICHTUNG DER VERKEHRSINFRASTRUKTUR SOWIE VERKEHRSTEILNEHMEREINRICHTUNG**
METHOD FOR COMMUNICATION WITHIN AN, IN PARTICULAR WIRELESS, MOTOR VEHICLE COMMUNICATION SYSTEM INTERACTING IN AN AD-HOC MANNER, DEVICE FOR THE TRAFFIC INFRASTRUCTURE AND ROAD USER DEVICE
PROCÉDÉ DE COMMUNICATION AU SEIN D'UN SYSTÈME DE COMMUNICATION D'UN VÉHICULE À MOTEUR PAR INTERACTION AD HOC, NOTAMMENT SANS FIL, DISPOSITIF FAISANT PARTIE DE L'INFRASTRUCTURE DE CIRCULATION, AINSI QUE DISPOSITIF POUR UN USAGER D'UN RÉSEAU DE CIRCULATION

(30) Priorität: 11.12.2012 DE 102012222780
(43) Veröffentlichungstag der Anmeldung: 11.03.2015
(73) Patentinhaber: Siemens Aktiengesellschaft, 80333 München (DE)
(72) Erfinder: KARACAN, Ömer, A-1230 Wien (AT); KASSLATTER, Fritz, A-3003 Gablitz (AT)
(86) Internationale Anmeldenummer: PCT/EP2013/073897
(87) Internationale Veröffentlichungsnummer: WO 2014/090505

(56) Entgegenhaltungen:
- EP-A1- 1 223 567
- EP-A1- 2 306 434
- WO-A1-2009/149730
- DE-A1-102008 036 131
- DE-A1-102011 101 359
- US-A- 5 821 878
- US-A1- 2003 063 015
- "Intelligent Transport Systems (ITS); Vehicular Communications; Basic Set of Applications; Definitions", ETSI DRAFT; ITSWG1-06D008_TR_102_638_FINAL_DRAFT_FOR_C OMMENT_RESOLUTION_AND_APPROBATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, Nr. V1.0.5, 15. April 2009 (2009-04-15), Seiten 1-78, XP014072942, [gefunden am 2009-04-15]
- SEPULCRE M ET AL: "On the importance of application requirements in cooperative vehicular communications", WIRELESS ON-DEMAND NETWORK SYSTEMS AND SERVICES (WONS), 2011 EIGHTH INTERNATIONAL CONFERENCE ON, IEEE, 26. Januar 2011 (2011-01-26), Seiten 124-131, XP031980985, DOI: 10.1109/WONS.2011.5720180 ISBN: 978-1-61284-189-2

## Beschreibung

Die Erfindung betrifft ein Verfahren zur Kommunikation innerhalb eines nach Art des ad-hoc zusammenwirkenden, insbesondere Drahtlos-, Kraftfahrzeugkommunikationssystems gemäß dem Oberbegriff des Anspruchs 1 sowie eine Einrichtung der Verkehrsinfrastruktur gemäß dem Oberbegriff des Anspruchs 23 und eine Verkehrsteilnehmereinrichtung gemäß dem Oberbegriff des Anspruchs 24.

Es ist bekannt, dass Funk-Sende-/Funk-Empfangseinrichtungen zur Kommunikation innerhalb eines ad-hoc beispielsweise drahtlos zusammenwirkenden Kraftfahrzeugkommunikationssystems für die Kommunikation zwischen Verkehrsteilnehmern untereinander im Einsatz sind. Ad-hoc zusammenwirkend bedeutet so genannte ad-hoc Netzwerke, also im Wesentlichen sich selbst organisierende spontan durch direkte Kommunikation der beteiligten Netzknoten gebildete bzw. betriebene Netze. Im Straßenverkehr umfasst diese Kommunikation in der Regel Kraftfahrzeuge, daher wird sie auch aus dem Englischen entlehnt "car to car" (C2C) Kommunikation genannt. Diese Kommunikation umfasst aber auch die Kommunikation zur Verkehrsinfrastruktur, die beispielsweise durch so genannte "road side units" (RSU), wie zum Beispiel Ampeln, gebildete Basisstationen zur Vermittlung der Kommunikation bzw. Verbreitung von Informationen an die Ampel angeschlossene Informationsnetzwerke oder steuernde Verkehrszentralen, gebildet werden. Diese Kommunikation wird - ebenfalls aus dem Englischen entlehnt - "car to infrastructure" (C2I) genannt. Da im Grunde Kraftfahrzeuge nicht die einzigen Verkehrsteilnehmer darstellen, sondern auch Fahrräder bzw. Fahrradfahrer und Fußgänger ebenso beteiligt sind, umfasst diese Kommunikation auch den Austausch von Daten zwischen von ihnen betriebenen Funk-Sende-/Funk-Empfangseinrichtungen und den von Kraftfahrzeugen betriebenen Funk-Sende-/Funk-Empfangseinrichtungen. Hierfür gibt es keinen aus dem Englischen entlehnten Begriff bzw. kein Akronym, aber sie fallen unter den für die Verallgemeinerung dieser Art von Kommunikation bekannten Begriff der "car to X" Technologie bzw. Kommunikation (C2X).

Dabei ist diese Art der Kommunikation von der bekannten Mobilfunkkommunikation zu unterscheiden, da Erstere in der Regel automatisiert, also überwiegend ohne Anstoß oder erforderliche Aktionen des Nutzers erfolgt und dem Zweck dient, verkehrsrelevante Daten zu sammeln und auszutauschen, so dass idealer Weise auf alle möglichen Verkehrssituationen angemessen reagiert werden kann, beispielsweise durch Warnungen des Nutzers oder automatisierte Reaktionen des Kraftfahrzeugs.

Für die Sammlung von Daten und vor allem deren Austausch ist es bekannt, dass jedes Kraftfahrzeug eine zyklische Botschaft im Abstand von wenigen Sekunden aussendet, die eine Fahrzeug-ID und Angaben zur Geschwindigkeit, Richtung und Position enthält.

Es ist ferner bekannt, dass Steuerungen von Straßenkreuzungen, beispielsweise durch RSU's durchgeführt werden und die Sequenz und das Timing von Ampelschaltungen in Abhängigkeit von Informationen wechseln, welche von einer Vielzahl von Sensoren stammen, die in den Boden unterhalb der Straßen und zwar je vorgegebener Fahrspur untergebracht sind. Die Informationen, die detektiert und gemeldet werden, enthalten beispielsweise auf einer mehrspurigen Straße die Fahrzeugpräsenz, die Fahrzeugrichtung sowie Fahrzeuggeschwindigkeit.

Es sind dabei unterschiedlichste Sensoren im Einsatz, um eine exakte Bestimmung der Position und Richtung von Fahrzeugen zu ermöglichen, welche auf einer bestimmten Fahrspur fahren.

Es ist ferner bekannt, dass die Effizienz der Verkehrssteuerung an einem Verkehrsknotenpunkt, wie beispielsweise einer Einmündung oder Kreuzung und dergleichen, davon abhängt, wie schnell sie von Fahrzeugen überquert werden. In der Regel kann hierauf durch Ampelschaltungen, also geeignete Intervalle für ein rotes, gelbes und grünes Signal, Einfluss genommen werden. Derzeitig ist die Steuerung trotz Einsatz verschiedenster Sensoren aber nicht optimal, so dass nach wie vor Stauungen entstehen.

Der Erfindung liegt daher die Aufgabe zugrunde, die oben genannten Probleme eines ad-hoc zusammenwirkenden, insbesondere Kraftfahrzeug-, Kommunikationssystems zu überwinden.

Aus der DE 10 2008 036 131 A1 ist ein Verfahren sowie eine Vorrichtung bekannt zur Erkennung der Verkehrssituation in einer Fahrzeugumgebung beschrieben, bei denen mittels einer Sensorik in dem eigenen Fahrzeug die fahrdynamischen Daten des eigenen Fahrzeugs ermittelt werden und mit anderen, in die Ermittlung einzubeziehenden Fahrzeugen eine Fahrzeug-zu-Fahrzeug-Kommunikation aufgebaut. Das Dokument DE 10 2011 101359 A1 beschreibt ein Verfahren zur drahtlosen Kommunikation zwischen Verkehrsteilnehmern (Kfz) untereinander und zwischen Verkehrsteilnehmern und einer Verkehrsinfrastruktureinrichtung im Nahfeld eines Knotenpunkts von Verkehrswegen, wie z.B. einer Ampelanlage, welche über eine Funktion zur Beeinflussung und Optimierung der Verkehrssteuerung verfügt, wobei unter anderem zur Ermittlung der Art des momentanen Fahrmanövers eines Verkehrsteilnehmers die Wahrscheinlichkeiten der möglichen Manöver des Verkehrsteilnehmers ermittelt werden.

Diese Aufgabe wird ausgehend von dem Verfahren gemäß dem Oberbegriff des Anspruchs 1 durch dessen kennzeichnende Merkmale, sowie ausgehend von der Einrichtung der Verkehrsinfrastruktur gemäß dem Oberbegriff des Anspruchs 23, durch dessen kennzeichnende Merkmale, ausgehend von der Verkehrsteilnehmereinrichtung gemäß dem Oberbegriff des Anspruchs 24, durch dessen kennzeichnende Merkmale, gelöst.

Bei dem Verfahren zur Kommunikation auf Grundlage eines nach Art des ad-hoc zusammenwirkenden, insbesondere Drahtlos-, Kraftfahrzeugkommunikationssystems, wobei die Kommunikation zwischen Verkehrsteilnehmern untereinander und/oder zwischen Verkehrsteilnehmern und Verkehrsinfrastruktur erfolgt, wird im Nahfeld eines Knotenpunkts von Verkehrswegen, insbesondere Einmündungen oder Überschneidungen von Verkehrswegen wie Straßen- oder Bahnkreuzungen, eine, einem ersten Verkehrsteilnehmer zugeordnete, Funk-Sende-/Funk-Empfangseinrichtung kontinuierlich eine Nachricht an mindestens eine zweite sich im Funkversorgungsbereich der ersten Funk-Sende-/FunkEmpfangseinrichtung befindende zweite, einer Einrichtung der Verkehrsinfrastruktur zugeordnete, Funk-Sende-/Funk-Empfangseinrichtung gesendet, das Versenden der Nachricht erfolgt derart, dass auf Grundlage der empfangenen Nachricht, je am Knotenpunkt möglichem Manöver zumindest ein mit einer Wahrscheinlichkeit für die Ausführung des Manövers an dem Knotenpunkt korrelierender Wert ermittelt wird, worauf auf Grundlage des korrelierenden Wertes eine Steuerung der Verkehrsteilnehmer erfolgt.

Durch das erfindungsgemäße Verfahren wird es möglich, eine präzisere Steuerung des Verkehrs an solchen Knotenpunkten durchzuführen, da mit Erfassung und Unterscheidung der einzelnen Manöver je Verkehrsteilnehmer eine detailliertere Abschätzung erfolgen kann, denn je Manöver und Anzahl von Verkehrsteilnehmern, die das Manöver durchführen wollen, kann sich eine unterschiedlich lange Verzögerung einstellen, die sogar zur Blockade führen kann. Dies wird mit der Erfindung verhindert. Die Abschätzung und anfallenden Daten korrelieren dabei mit der Größe des Nahfelds. Diese kann daher variabel angelegt sein. D.h. es wird ein Radius als Basisgröße definiert und ggf. zu einem späteren Zeitpunkt verändert werden, wenn eine Anpassung notwendig und erforderlich ist. Das Nahfeld kann aber auch einfach durch die Radien der Funkversorgungsbereiche, der beteiligten ersten und zweiten Funk-Sende-/Funk-Empfangseinrichtungen bzw. der für die Kommunikation notwendigen Überlappung dieser Funkversorgungsbereiche. Wird der korrelierende Wert für jede erste Funksende-/Funkempfangseinrichtung als eine erste Zeitspanne berechnet, so kann aufgrund dieser Weiterbildung der Erfindung die Steuerung sich auf einzelne Zeiten stützen, welche für den jeweiligen Verkehrsteilnehmer ermittelt worden ist bzw. auf Summen der Zeiten stützen, zum Beispiel gruppiert nach Manöver. Erfindungsgemäß wird der korrelierende Wert für jedes mögliche Manöver als eine von einem ortsfesten Referenzpunkt, insbesondere Stopplinie am Knotenpunkt, ausgehendes Längenmaß berechnet. Hierdurch kann den einzelnen Verkehrsteilnehmern über ihre Funk-Sende-/Funkempfangseinrichtungen übermittelt werden, in welcher "cleareance zone" sie sich aufhalten, wobei jede "cleareance zone" beispielsweise dafür stehen kann, ob der Abschluss des Manövers in der aktuellen Grünphase einer Ampel erfolgen kann, oder in folgenden Phasen.

Zusätzlich oder alternativ ist es auch von Vorteil, wenn als korrelierender Wert je Manöver eine zweite Zeitspanne ermittelt wird, die derart definiert ist, dass sie je möglichem Manöver das Intervall festlegt, mit welchem eine Phase der Ausführung eines dezidierten Manövers beginnt. Hierdurch kann die Steuerung einem Verkehrsteilnehmer auch eine Abschätzung über die zukünftige Entwicklung der Ausführungsphasen geben und so unterschiedlichen Auslastungsphasen wie in Hauptverkehrszeiten oder des Nachts Rechnung tragen aber auch kurzfristigere Intervallanpassungen durch aktuelle Entwicklungen vornehmen und mitteilen.

Vorzugsweise werden die erste und/oder zweite Zeitspanne und/oder das Längemaß als ein ganzzahliger Wert "Integer" übermittelt. Dies erlaubt eine direkte rechnertechnische Nutzung. Das Längenmaß kann dabei als Teil eines Variablensatzes, beispielsweise als "length" bezeichnet, definiert sein. Ebenso kann die Intervalldauer, als Teil dieses Satzes, beispielsweise als "interval" bezeichnet, definiert sein.

Weiterhin ist es von Vorteil, wenn als mögliche Manöver eine Kehrtwende, Geradeausfahrt, Links- und oder Rechtsabbiegen, Spurwechsel oder Vergleichbare definiert sind. Hierdurch werden die gängigen Manöver im Straßenverkehr erfasst. Je differenzierter die Manöver dabei erfasst werden, desto genauer kann ein korrelierender Wert ermittelt werden. Beispielsweise kann bei Links-(/Rechts-)abbiegen noch in scharf Links oder halb Links feiner unterschieden werden. Auch andere Klassen von Manövern sind denkbar und sollen mit dieser Weiterbildung umfasst sein.

Bevorzugt wird das mögliche Manöver als Zeichenkette "String" übermittelt und kann Teil des Variablensatzes sein, wo es als "maneuver" bezeichnet sein kann. Alternativ kann das Manöver durch eine, insbesondere als "Integer" definierte, Identifikationsnummer gekennzeichnet sein. Auch hier wird die maschinen- bzw. rechnergestützte Verarbeitung unterstützt. Somit auch die Implementierung des Verfahrens.

Wenn die Steuerung derart erfolgt, dass den ersten Funksende-/Funkempfangseinrichtungen zweite Nachrichten übermittelt werden, die zumindest den korrelierenden Wert enthalten, so kann seitens des die erste Funk-Sende-/Funk-Empfangseinrichtung innehabenden Verkehrsteilnehmers der Wert unmittelbar oder nach lokaler Verarbeitung angezeigt werden, beispielsweise in Verbindung mit der Anzeige von alternativen Manövern. So wird dem Verkehrsteilnehmer eine Möglichkeit gegeben, flexibel auf die Gegebenheiten zu reagieren.

Wenn alternativ oder ergänzend die Steuerung derart erfolgt dass durch die zweite Nachricht derart auf die ersten Verkehrsteilnehmer eingewirkt wird, dass ein Halten vor einer, insbesondere je Manöver, definierten Stopplinie des Knotens erzwungen wird, so können Blockaden verhindert werden, da damit virtuell eine Zone geschaffen wird, in der Kollisionen mit anderen Verkehrsteilnehmern in anderen Phasen der Benutzung des Knotenpunktes erzeugt und freigehalten wird. Beispielsweise können im Anschluss an eine Grünphase die Fußgänger, Radfahrer oder Fahrzeuge einer querenden Straße bei ihrer Grünphase ungehindert ihre Fahrspuren bzw. Gehwege nutzen und so Gefahren vermieden aber auch weitere Blockaden vermieden werden.

Vorzugsweise wird zur Einwirkung, insbesondere mit der zweiten Nachricht, eine Datenübertragung eines als logischen Wert "Boolean" ausgestalteten Steuersignals, durchgeführt. Dieser kann auch Teil des Datensatzes, beispielsweise als "waitOn-Stopline" bezeichnet, sein.

Erfolgt die Steuerung der Verkehrsteilnehmer derart, dass Informationen von Signalgebern, insbesondere elektronische Schilder, Ampeln, Verkehrsleitsysteme, auf Grundlage der ersten Korrelation verändert werden, so kann unmittelbar auf die Verkehrssituation am Ort des Geschehens eingewirkt werden.

Vorteilhaft ist es auch, wenn die erste Nachricht im Nahfeld, insbesondere dem Funksende-/Funkversorgungsbereich der Einrichtung der Verkehrsinfrastruktur, zumindest zeitweise periodisch wiederholt gesendet wird, da hierdurch eine hohe Aktualität gewährleistet wird.

Bevorzugt wird die Zeitdauer der Periode festgelegt, so dass der erfindungsgemäße implementierte Algorithmus überall die gleichen Ergebnisse liefert. Ein in der Regel für die Auswertung und Zuverlässigkeit gut geeigneter Wert liegt dabei um die 100ms.

Vorzugsweise enthält die erste Nachricht eine das beabsichtigte Manöver, die Fahrtrichtung, Position, Dimension, Typ und/oder Geschwindigkeit des ersten Verkehrsteilnehmers wiedergebende erste Information. Hierdurch lässt sich der korrelierende Wert sehr akkurat ermitteln.

Wird die Nachricht derart versendet, dass sie eine das beabsichtigte Manöver, die Fahrtrichtung, Position, Dimension, Typ und/oder Geschwindigkeit des ersten Verkehrsteilnehmers, insbesondere Fahrzeugs, wiedergebende Information enthält, kann der korrelierende Wert präzise ermittelt werden.

Wird die übermittelte Position auf Grundlage eines sattelitengestützten Navigationssystems, wie GPS, Galileo und/oder anderen nationalen und internationalen Navigationssatellitensystemen zur Positionsbestimmung, ermittelt, so steht ein kostengünstiges und mit der Durchdringung von Navigationsgeräten auch weit verbreitetes System zur Verfügung.

Die Erfindung kann auch dahingehend weitergebildet sein, dass die Funk-Sende-/Funk-Empfangseinrichtungen zur Datenübertragung gemäß einem dedizierten Kurzstreckenfunkkommunikationsstandard, insbesondere dem so genannten Dedicated Short Range Communication, "DSRC", betrieben werden. Solche Kurzstreckenfunkstandards sind besonders für die Kommunikation zwischen Vehikeln und anderen mobilen Verkehrsteilnehmern geeignet und gewährleisten durch die Standardisierung, dass die Interaktion auch funktioniert. Insbesondere integriert mit dem WLAN Standard 802.11 und seinen Derivaten, wie 802.11a/b/e/g/n/p, funktioniert dies sehr gut.

Sollen die erfindungsgemäßen Funk-Sende-/Funk-Empfangseinrichtungen in USA betrieben werden, so ist es vorteilhaft, wenn sie zur Datenübertragung gemäß dem so genannten Wireless Access in Vehicular Environments, "WAVE"-, Standard oder Derivaten hiervon betrieben werden.

Eine definierte Funkschnittstelle der Funk-Sende-/Funk-Empfangseinrichtungen erhält man dabei, wenn die Funk-Sende-/Funk-Empfangseinrichtungen zur Datenübertragung zumindest teilweise gemäß Standards IEEE 1609 und/oder ETSI Intelligent Transportation Systems, ITS" oder seinen Derivaten betrieben werden.

Eine weite Verbreitung und bzw. Durchdringung bringt dabei die Weiterbildung, bei der die Funk-Sende-/Funk-Empfangseinrichtungen zu einer Datenübertragung (die Kommunikation), zumindest teilweise gemäß Standards IEEE802.11 oder seinen Derivaten, insbesondere dem IEEE 802.11p, betrieben werden, da mittlerweile jedes tragbare Unterhaltungsgerät, wie Handy, PDA, eine derartige WLAN-Schnittstelle aufweist, so dass ohne große Änderungen diese Geräte für die verkehrsrelevante Kommunikation unter Verkehrsteilnehmern genutzt werden können. Sehr zuverlässig bei sich schnell bewegenden Objekten wie motorisierten Fahrzeugen ist dabei die das Derivat IEEE 802.11p nutzende Weiterbildung.

Denkbar ist auch, dass die Funk-Sende/Funk-Empfangseinrichtungen bzw. das zugehörige Verfahren die Kommunikation mit Verkehrsteilnehmern zumindest teilweise gemäß einem Mobilfunkstandard, wie dem GSM, UMTS, LTE oder Derivaten hiervon, durchführt. Dies ist insbesondere für eine bessere Durchdringung und Erfassung von Vorteil, da Fußgänger und Radfahrer, welche sich in Besitz eines Mobilfunkgerätes (Handys) befinden, wie bereits angedeutet, ebenfalls als Verkehrsteilnehmer in die Kommunikation integriert werden können und so ein umfassenderes Gesamtbild des Verkehrs gebildet werden kann.

Weitere Durchdringung erreicht man, wenn die Funk-Sende-/Funk-Empfangseinrichtungen so weitergebildet werden, dass sie zur Kommunikation mit Verkehrsteilnehmern zumindest teilweise gemäß dem europäischen Standard ETSI TC ITS, dem amerikanischen so genannten "ehicle Safty Communications, VSC" Programm, dem Nachfolger hiervon "Connected Vehicle Communications Program" oder japanischen "Advanced Vehicle Safety Program, AVS" betrieben werden. Hierdurch wird die erfindungsgemäße Einrichtung in verschiedenen Teilen der Welt einsetzbar.

Dies wird vorteilhaft ergänzt bzw. es bietet sich auch die Alternative, die verfahrensgemäß genutzten Funk-Sende-/Funk-Empfangseinrichtungen derart weiterzubilden, dass sie zur Kommunikation mit Verkehrsteilnehmern zumindest teilweise gemäß dem ISO Standard "continuous-air long and medium range", CALM, betrieben werden. Damit ist die Einrichtung nicht nur weltweit nutzbar, sondern dies auch ohne Änderungen bzw. nationalen Anpassungen, was dem Mobilitätsgedanken von Fahrzeugen angemessen ist.

Die Erfindung betrifft auch eine Einrichtung der Verkehrsinfrastruktur zur Kommunikation auf Grundlage eines nach Art des ad-hoc zusammenwirkenden, insbesondere Drahtlos-, Kraftfahrzeugkommunikationssystems, wobei die Kommunikation zwischen Verkehrsteilnehmern untereinander und/oder zwischen Verkehrsteilnehmern und Verkehrsinfrastruktur erfolgt, die derart ausgestaltet ist, dass es zum Empfang mindestens einer von einer ersten, einem ersten Verkehrsteilnehmer zugeordneten, Funk-Sende-/Funk-Empfangseinrichtung gesendeten ersten Nachricht, eine zweite Funk-Sende-/Funk-Empfangseinrichtung aufweist, sowie Mitteln zum Ermitteln eines je am Knotenpunkt möglichem Manöver zumindest ein mit einer Wahrscheinlichkeit für die Ausführung des Manövers an dem Knotenpunkt korrelierenden Werts auf Grundlage der empfangenen Nachricht, Mittel für eine Steuerung der Verkehrsteilnehmer auf Grundlage des korrelierenden Wertes, aufweist, und mit Mitteln ausgestaltet ist, zum Bilden einer zweiten Nachricht sowie Mitteln ausgestaltet ist, zur Übermittlung der zweiten Nachricht durch die zweite Funk-Sende-/Funk-Empfangseinrichtungen an die erste Funk-Sende-/Funk-Empfangseinrichtung.

Die Erfindung betrifft weiterhin auch eine Verkehrsteilnehmereinrichtung zur Kommunikation auf Grundlage eines nach Art des ad-hoc zusammenwirkenden, insbesondere Drahtlos-, Kraftfahrzeugkommunikationssystems, wobei die Kommunikation zwischen Verkehrsteilnehmern untereinander und/oder zwischen Verkehrsteilnehmern und Verkehrsinfrastruktur erfolgt, wobei es derart ausgestaltet ist, dass es zum Senden mindestens einer ersten Nachricht mittels einer ihr zugeordneten ersten Funk-Sende-/Funk-Empfangseinrichtung an eine sich im Funkversorgungsbereich der ersten Funk-Sende-/Funk-Empfangseinrichtung befindende zweite, einem zweiten Verkehrsteilnehmer oder einer Einrichtung der Verkehrsinfrastruktur zugeordnete, befähigt ist, das Versenden der ersten Nachricht derart erfolgt, dass auf Grundlage der empfangenen ersten Nachricht, eine erste Richtung einer Positionsveränderung des ersten Verkehrsteilnehmers ermittelt wird, mit Mitteln zum Empfang einer im Falle einer Steuerung übermittelten zweiten Nachricht ausgestaltet ist, sowie mit Mitteln zum Durchführen einer auf die Steuerung bezogenen Prozedur ausgestaltet ist. Diese erfindungsgemäßen Apparaturen erlauben die Implementierung des erfindungsgemäßen Verfahrens und somit eine Steigerung der Ausschöpfung der Vorteile des erfindungsgemäßen Verfahrens zugunsten von Verkehrssicherheit.

Weiterbildungen dieser Anordnungen ergeben sich "mutatis mutandis" aus den Weiterbildungen des Verfahrens, wobei damit auch "mutatis mutandis" dieselben Vorteile wie die entsprechenden Verfahrensweiterbildungen aufweisen, jeweils mit dem zusätzlichen Vorteil, dass sie zur Realisierung des gegenständlichen Vorteils beitragen.

Die Erfindung wird beispielhaft anhand zweier Figuren näher erläutert, dabei zeigt die
- Figur 1: schematisch die Situation von Verkehrsteilnehmern in einem mobilen ad-hoc Netz an einer Einmündung, bei unblockiertem Abbiegevorgang, und
- Figur 2: schematisch die Situation von Verkehrsteilnehmern in einem mobilen ad-hoc Netz an einer Einmündung, bei blockiertem Abbiegevorgang.

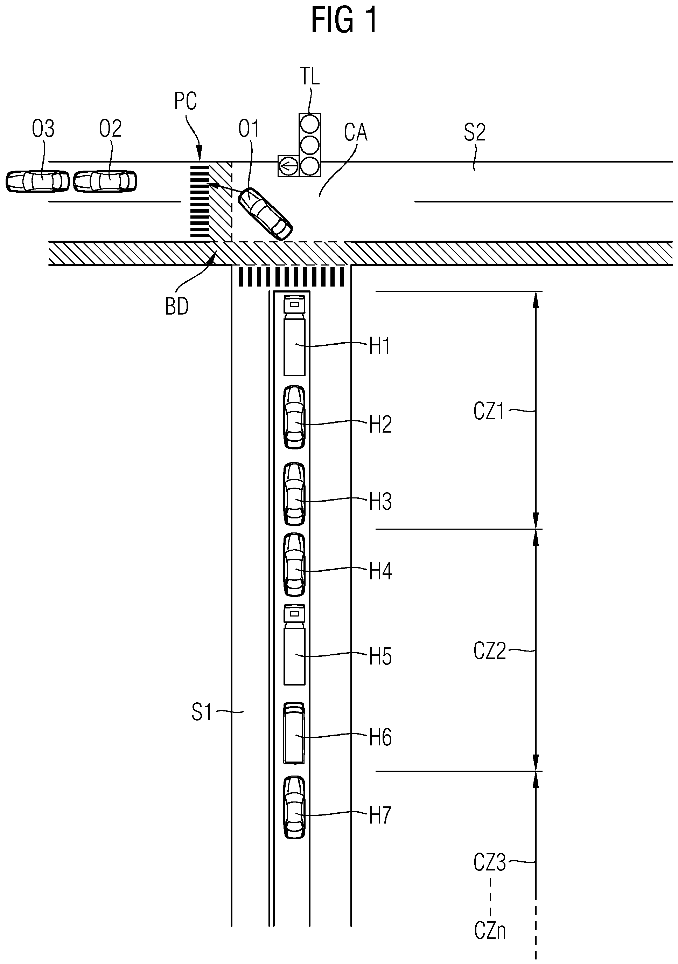

In Figur 1 ist ein Szenario dargestellt von dem ausgehend als ein Ausführungsbeispiel eine der möglichen Implementierungen der Erfindung an einer Einmündung dargestellt Ist.

Es sind sich unter anderem für einen Linksabbiegevorgang auf einer ersten Straße S1 einreihende wartende Fahrzeuge H1...H7 zu erkennen. Ferner sind ein einen Linksabbiegevorgang noch nicht vollständig beendendes erste Fahrzeug O1 sowie sich auf einer die erste Straße S1 querende zweite Straße S2 befindende Fahrzeuge 02...03 zu erkennen. Letztere sind von den als Zebrastreifen dargestellten Fußgängerüberwegen PC so weit entfernt, dass das erste abbiegende Fahrzeug bei seinem Abbiegevorgang nicht behindert wird und somit ein Abschluss des Abbiegevorgangs nicht durch sie behindert werden würde.

Das erste Fahrzeug O1 befindet sich dabei aufgrund des noch nicht vollständig abgeschlossenen Linksabbiegevorgangs innerhalb der Gefahrenzone, die so genannte "conflict area" CA, die gemäß dem Ausführungsbeispiel durch Einrichtungen der Verkehrsinfrastruktur derart überwacht werden, dass ermittelt wird, ob sich innerhalb dieser Zone Fahrzeuge aufhalten, d.h. in der Regel den möglichst akkurat bestimmten Ort und die Ausrichtung des jeweiligen Fahrzeugs.

Hierdurch wird der erfindungsgemäße Ansatz realisiert, den Verkehrsfluss zu optimieren, wobei dies insbesondere die Informationsversorgung von Fahrern bzw. deren Fahrzeugen betrifft, die an einem Verkehrsknotenpunkt, wie beispielsweise Kreuzung oder Einmündung, auf die Möglichkeit des Durchführens eines Manövers, also beispielsweise Geradeausfahren, Links- oder Rechtsabbiegen, warten. Erfindungsgemäß wird dabei die als "vehicle-to-X-communication" (Vehicle-to-Roadside, Roadside-to-Vehicle, V2X) bekanntes, bei solchen Verkehrkreuzungen zum Einsatz kommendes, Kommunikationssystem, welches ein kooperatives System der beteiligten Verkehrseinrichtungen darstellt, verbessert.

Die kooperative Kommunikation erfolgt dabei in diesem Umfeld im Wesentlichen zwischen Fahrzeugen, die mit einer entsprechenden Funksende-/Funkempfangseinrichtung ausgestattet sind - und auch als "On Board Units" (OBU) bezeichnet werden - und Einrichtungen der Verkehrsinfrastruktur, wie beispielsweise Ampeln, Verkehrsleitsysteme, Schilder oder andere eher statische Einrichtungen entlang eines Verkehrswegs, die auch als so genannte "Roade Side Units" (RSU) bezeichnet werden.

Neben Sicherheitsaspekten tauschen diese Einrichtungen auch hinsichtlich einer Optimierung des Verkehrsflusses Informationen aus. Die Erfindung greift nun dahingehend ein, dass beruhend auf dieser Kommunikation eine Verkehrssteuerung erfolgt, die derart ausgestaltet ist, dass sie den Verkehrsfluss ermittelt und zwar für jedes Manöver, das an der Einmündung geschieht sowie den Fahrer, d.h. mittels Übertragung an das OBU, darüber informiert wie die Zeitdauer, die zur Überquerung der Einmündung benötigt wird, zum gegenwärtigen Zeitpunkt eingeschätzt wird.

Es wird gemäß dem Ausführungsbeispiel den für unter anderem ein Linksabbiegen wartenden Fahrzeugen H1...H7 bzw. dem Fahrer auch angezeigt, mit welcher Wahrscheinlichkeit das von ihnen beabsichtigte Manöver in der nächsten oder einer der folgenden Grünphasen der Ampeln erfolgen kann. Dies kann zum Beispiel in einer Rotphase erfolgen, so dass der Fahrer nicht abgelenkt ist und diese Information erhält und/oder abrufen kann, während er nicht fährt.

Auf diese Art und Weise kann der Fahrer seine volle Aufmerksamkeit auf den Übergang von Rotphase der Ampel zur Grünphase der Ampel richten und sein geplantes Manöver schnellstmöglich ausführen. Dies wird insbesondere schnellstmöglich erfolgen, wenn das Fahrzeug sich bereits in der ersten "clearance zone" CZ1 aufhält.

Ausführungsbeispiele, der hierfür erforderlichen bzw. dies ermöglichenden Prozeduren, werden im Folgenden detaillierter beschrieben.

Die Verkehrssteuerung detektiert den Fluss der fahrenden Fahrzeuge im zu steuernden Bereich eines Verkehrsknotens - hier Einmündung - dadurch, dass die Fahrzeuge periodisch, in Abständen von 100ms, ihren Status an die Verkehrsinfrastruktur, d.h. die Verkehrssteuerung, übermitteln. Dieser Status kann dabei die Position, Fahrtrichtung, Fahrzeuggröße und dergleichen sein. Die Verkehrssteuerung hat somit eine detaillierte Informationslage, aus der die exakte Position und Bewegung der Fahrzeuge, also auch den Fahrspuren, welche sie in der Nähe der Einmündung einnehmen bzw. auswählen und wieder verlassen. Insbesondere hat die Verkehrssteuerung dadurch auch Kenntnis über die exakten Fahrzeugpositionen und ihrer Bewegungsrichtungen innerhalb der collision-area CA.

Die Verkehrssteuerung verfolgt die übertragenen Daten konstant, so dass sich stets eine aktuelle Informationslage bildet.

In der Figur 1 handelt es sich bei den Fahrzeugen H1...H7 um wartende Fahrzeuge, welche auf die Möglichkeit in die querende Straße S2 links abzubiegen warten. Somit sind sie also vom Signal der Ampel TL und der eigenen gegenwärtigen Position aber auch von der Position (und weiteren Größen wie Dimension, Bewegungsrichtung) der anderen Fahrzeugen abhängig.

In der Figur 1 ist ferner zu erkennen, dass das erste Fahrzeug O1 gerade beim Abschluss des Linksabbiegevorgangs ist und die zweiten Fahrzeuge 02...03 diesen Vorgang bereits abgeschlossen haben.

Um nun eine Zeitdauer zu ermitteln, wertet die Verkehrssteuerung gemäß dem Ausführungsbeispiel das Wissen über die Bewegung der Fahrzeuge auf den Fahrspuren sowie aufgrund ihrer Dimension und aufgrund ihres Wissens, welche und wie viele Fahrzeuge welche Manöver durchführen wollen, d.h. die Einmündung passieren, aus. Da dies laufend erfolgt, wird die jeweils aktuelle Zeitangabe entsprechend den äußeren Umständen, wie beispielsweise dem hohen Verkehrsaufkommen zu Stoßzeiten (rush hour) oder ruhigeren Phasen wie beispielsweise in der Nacht, variieren.

Mit der Ermittlung der Zeitdauer und der Abschätzung, wie viele Fahrzeuge die Einmündung durch Ausübung des gewünschten Manövers (Links- oder Rechtsabbiegen) abschließen können, errechnet die Verkehrssteuerung die Länge von so genannten "clearance zones" CZ1...3.

Die Aufteilung der Zonen CZ1...3 und Ermittlung ihrer Dimension (Länge) erfolgt dabei beispielsweise so, dass jede Zone für die Grünphase steht, in der das jeweilige Fahrzeug der wartenden Fahrzeuge H1...7, welches sich in der Zone CZ1...3 befindet, voraussichtlich sein Manöver abgeschlossen haben wird.

Die Länge der ersten Zone CZ1, die die Zone mit der höchsten Wahrscheinlichkeit zum Abschluss des Linksabbiegevorgangs in der nächsten Grünphase der Ampel TL, darstellt, erstreckt sich dabei beispielsweise ausgehend von einer Stopplinie für Linksabbieger bis zum Anfang der zweiten Zone CZ2.

Zur Berechnung können gemäß Ausführungsbeispiel einzelne oder Kombinationen der folgenden Parameter hinzugezogen werden:
- eine Zählung wie viele Fahrzeuge die Einmündung bei der letzten Grünphase der Ampel TL überwunden haben,
- eine Berechnung einer durchschnittlichen Fahrzeuglänge anhand der von den Fahrzeugen übertragenen Daten,
- Ermittlung der durchschnittlichen Anzahl gezählter Fahrzeuge, die die Einmündung passieren, insbesondere über einen bestimmten Zeitraum, wie beispielsweise 10 Minuten,
- mathematische Verknüpfung der durchschnittlichen Anzahl mit der durchschnittlichen Länge der Fahrzeuge zur Ermittlung der Länge respektive Länge.

Im Anschluss an die Berechnung wird der jeweils aktuelle Wert über die Länge ihrer jeweiligen clearance-zone, d.h. die voraussichtliche Grünphase bis zum Abschluss des Linksabbiegevorgangs/-manövers (bzw. Rechtsabbiegevorgangs oder je nach Typ des Verkehrsknotens anderen Manövers), an die noch wartenden Fahrzeuge H1...7 übermittelt.

Zusätzlich werden die wartenden Fahrzeuge H1...H7 über das Zeitintervall zwischen jedem Start eines möglichen Manövers informiert bzgl. jeder Grünphase.

Ausgehend von diesen übertragenen Daten können die einzelnen wartenden Fahrzeuge H1...H7 individuell für sich die Zeitdauer bestimmen, in der voraussichtlich das geplante Manöver ausgeführt sein wird, wobei sie neben den genannten übertragenen Daten auch die eigene Position, die beispielsweise sattelitengestützt oder mobilfunkgestützt eigenständig ermittelt wird, verwenden können.

Im Anschluss hieran ist das jeweilige Fahrzeug der wartenden Fahrzeuge H1...7 dann in der Lage, seinem Fahrer Informationen über das geplante Manöver (die Wartezeit) zu geben, so dass dieser sich gegebenenfalls für ihm selbst bekannte oder auf seinem Navigationssystem basierende Alternativen für das Manöver entschließen kann.

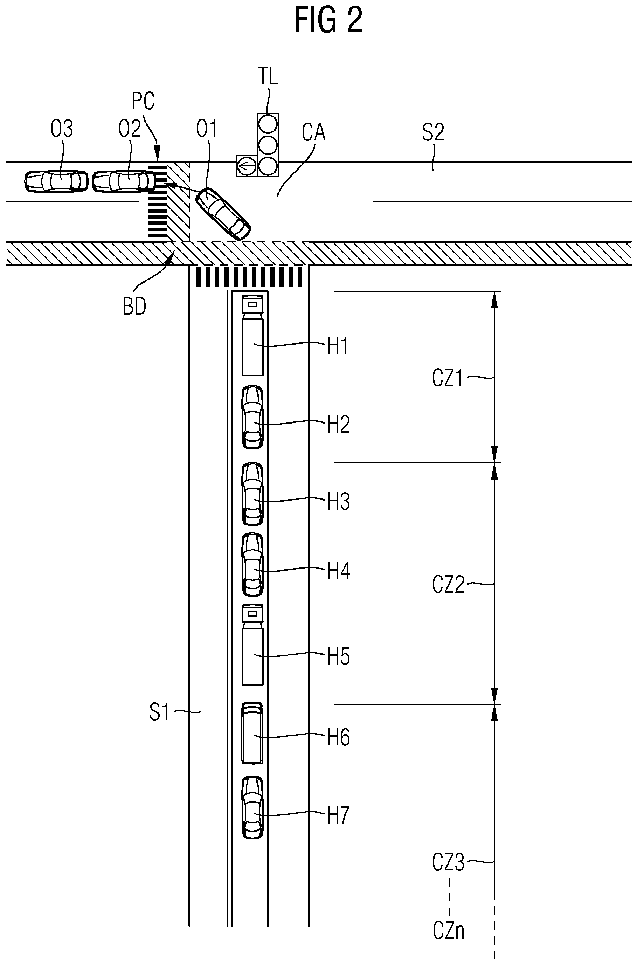

In der Figur 2 ist ein Szenario dargestellt, welches bezüglich dem Ausführungsbeispiel aus Figur 1 bzgl. der beteiligten Entitäten gleicht, so dass deren Bezeichnung identisch ist. Bei der Variante gemäß Figur 2 ist jedoch noch zusätzlich vorgesehen, dass die Ampel TL mit der Verkehrssteuerung derart interagiert, dass sie auf die Verkehrsregulierung bzw. den Verkehrsfluss Einfluss nimmt.

Zur Erläuterung sind die zweiten Fahrzeuge 02...03 in der Figur 2 in einer Position, wo sie das Abschließen des Abbiegevorgangs des ersten Fahrzeugs O1 behindern.

Die Einflussnahme gemäß der Variante erfolgt dabei, in dem sie die Auslastung der Fahrspuren, beispielsweise der Linksabbiegerspur, beobachtet und der Verkehrssteuerung meldet, so dass abhängig von dieser Auslastung die Verkehrssteuerung den Fahrzeugen, im Beispiel den wartenden Fahrzeugen H1...H7, folgende den Verkehr regulierende Anweisungen geben kann:
- Wenn sich Fahrzeuge, wie das erste wartende Fahrzeug H1, an vorderster Stelle zum Abbiegen befinden, nämlich wie in Figur 1 dargestellt, hinter der Haltelinie für das Linksabbiegen, wird das erste wartende Fahrzeug H1 angewiesen, so lange hinter der Haltelinie zu verbleiben wie sich das erste abbiegende Fahrzeug O1 in der collision-area CA befindet bzw. die Zielfahrspur Kapazitäten aufweist, um das erste wartende Fahrzeug H1 aufzunehmen. Durch diese Anweisung wird sowohl die Fußgängerwege PC als auch der Fahrradweg BP frei gehalten. Dies ist insbesondere von Vorteil, wenn das erste wartende Fahrzeug H1 nicht abbiegen konnte und die Ampel TL inzwischen auf Rot geschaltet hat, so dass es diese Spuren länger blockieren würde.
- Solche Fälle kann dann die Verkehrsteuerung zum Anlass nehmen für eine Aktualisierung der Wahrscheinlichkeiten bzw. geschätzte Zeiten für einen Abschluss des Abbiegevorgangs zu aktualisieren. Beim gegebenen Beispiel der nicht freien collision-area CA wird dies in der Regel zu einer Reduzierung der Abbiegewahrscheinlichkeit führen und entsprechend die dynamisch ermittelte Längen der "clearance zonen" CZ1..CZₙ verkürzen, insbesondere der ersten CZ1, und die folgenden "clearance zonen" CZ2,CZ3,..,CZn vom Längenmaß bezogen auf die Stopplinie aufrücken, sodass zum Beispiel das dritte wartende Fahrzeug H3 in eine zweite "clearance zone" CZ2 fällt und dadurch wahrscheinlich erst in der nächsten Grünphase das beabsichtigte Manöver durchführen kann.

Die Anweisungen gemäß dem in Figur 2 gezeigten Fall aber auch für die in Figur 1 erläuterten Übertragungen der Nachrichten, können unter Nutzung eines Mobilfunkkommunikationsstandards wie GSM, UMTS, LTE oder Derivaten hiervon, erfolgen. Beispielsweise kann ein hierzu befähigtes Mobilfunkendgerät des Fahrzeugführers genutzt werden, welches an die Fahrzeugsteuereinrichtung drahtgebunden oder drahtlos über einen Kurzstreckenfunkstandard, beispielsweise Bluetooth, Near Field Communication oder Vergleichbaren, angebunden ist. Dies ist insbesondere in einem Verkehrskommunikationssystem von Nutzen, wo auch die Fußgänger und Radfahrer über ihre Mobilfunkendgeräte in die Steuerung mit eingebunden werden sollen. Je nachdem, ob sie nun ein Fahrzeug führen (was entsprechend detektiert wird) oder dieses verlassen werden sie vom System als entsprechende Verkehrsteilnehmer eingestuft und einbezogen.

Alternativ bzw. ergänzend wird die Kommunikation der Verkehrssteuerung und des Fahrzeugs je nach Einsatzort bzw. -art gemäß einzelner Funkkommunikationsstandards oder Kombinationen hiervon realisiert. Bei den Funkkommunikationsstandards kann es sich beispielsweise um Dedicated Short Range Communication, "DSRC", Wireless Access in Vehicular Environments, "WAVE"- Standard oder Derivaten, IEEE 1609 und/oder ETSI Intelligent Transportation Systems, ITS oder seinen Derivaten, IEEE 802.11 oder seinen Derivaten, insbesondere dem IEEE 802.11p, handeln.

Kombinationen der Standards sind insbesondere dann denkbar, wenn Steuernachrichten auf gesonderten Wegen übertragen werden sollen, als die periodischen von den Fahrzeugen versandten Nachrichten, um so eine Kollision zu übertragender Daten zu minimieren bzw. die Ressourcennutzung zu optimieren. Es kann auch von Vorteil sein, Meldungen direkt an Endgeräte zu senden und dabei, um beispielsweise zeitkritische Meldungen, wie Warnungen, schnell zu versenden, deren Funkstandards zu nutzen.

Die Vorteile der Erfindung, die sich anhand des Beispiels bzw. unter anderem an den dargestellten Szenarien zeigen, liegen in einer größeren Effizienz der Freigabeintervalle bei Manövern in bzw. an einem Verkehrsknotenpunkt, wie einer Kreuzung, einer Einmündung oder Ähnlichen.

Der Fahrzeugführer bzw. Verkehrsteilnehmer ist zudem umfassend über die Wartezeiten spezifischer Manöver an Ampeln informiert.

Durch diese Kenntnis ist der Fahrer zudem frei und in der Lage, rechtzeitig Alternativen für sein geplantes Manöver einzuleiten.

Allen voran werden Stauungen und Blockaden an Verkehrsknoten vermieden bzw. aufgelöst. Die Erfindung ist dabei nicht auf das dargestellte Szenario für das Ausführungsbeispiel beschränkt. So kann es etwa auch bei der Steuerung von Zügen, oder auch für Steuerungen von Fahrzeugen zu Wasser oder in der Luft eingesetzt werden, wo gleiche oder vergleichbare Situationen auftreten bzw. die vorteilhaften Effekte der Erfindung die gleichen oder vergleichbaren Verbesserungen im Verkehr bringen.

## Patentansprüche

1. Verfahren zur Kommunikation auf Grundlage eines nach Art des ad-hoc zusammenwirkenden, insbesondere Drahtlos-, Kraftfahrzeugkommunikationssystems, wobei die Kommunikation zwischen Verkehrsteilnehmern (H1-H7) untereinander und/oder zwischen Verkehrsteilnehmern (H1-H7) und Verkehrsinfrastruktur (TL) erfolgt, wobei
a) im Nahfeld eines Knotenpunkts von Verkehrswegen, insbesondere Einmündungen oder Überschneidungen von Verkehrswegen wie Straßen- oder Bahnkreuzungen, eine, einem ersten Verkehrsteilnehmer zugeordnete, Funk-Sende-/FunkEmpfangseinrichtung kontinuierlich eine Nachricht an mindestens eine zweite sich im Funkversorgungsbereich der ersten Funk-Sende-/Funk-Empfangseinrichtung befindende zweite, einer Einrichtung der Verkehrsinfrastruktur zugeordnete, Funk-Sende-/Funk-Empfangseinrichtung sendet,
b) das Versenden der Nachricht derart erfolgt, dass auf Grundlage der empfangenen Nachricht, je am Knotenpunkt möglichem Manöver zumindest ein mit einer Wahrscheinlichkeit für die Ausführung des Manövers an dem Knotenpunkt korrelierender Wert ermittelt wird,
c) auf Grundlage des korrelierenden Wertes eine Steuerung der Verkehrsteilnehmer erfolgt,
**dadurch gekennzeichnet, dass**
als ein korrelierender Wert der korrelierende Wert für jedes mögliche Manöver als ein von einem ortsfesten Referenzpunkt, insbesondere Stopplinie am Knotenpunkt, ausgehendes Längenmaß berechnet wird.

2. Verfahren nach dem vorhergehenden Anspruch, **dadurch gekennzeichnet, dass** der korrelierende Wert für jede erste Funksende-/Funkempfangseinrichtung als eine erste Zeitspanne zum Durchführen des Manövers berechnet wird.

3. Verfahren nach einem der vorhergehenden Ansprüche, **dadurch gekennzeichnet, dass** als korrelierender Wert je Manöver eine zweite Zeitspanne ermittelt wird, die derart definiert ist, dass sie je möglichem Manöver das Intervall festlegt, mit welchem eine Phase der Ausführung eines dezidierten Manöver beginnt.

4. Verfahren nach einem der vorhergehenden Ansprüche, **dadurch gekennzeichnet, dass** die erste und/oder zweite Zeitspanne und/oder das Längenmaß als ein ganzzahliger Wert übermittelt wird.

5. Verfahren nach einem der vorhergehenden Ansprüche, **dadurch gekennzeichnet, dass** als mögliche Manöver eine Kehrtwende, Geradeausfahrt, Links- und/oder Rechtsabbiegen, Spurwechsel oder Vergleichbare definiert ist.

6. Verfahren nach dem vorhergehenden Anspruch, **dadurch gekennzeichnet, dass** das mögliche Manöver als Zeichenkette "String" oder durch eine Identifikationsnummer übermittelt wird.

7. Verfahren nach einem der vorhergehenden Ansprüche, **dadurch gekennzeichnet, dass** die Steuerung derart erfolgt, dass den ersten Funksende-/Funkempfangseinrichtungen zweite Nachrichten übermittelt werden, die zumindest den korrelierenden Wert enthalten.

8. Verfahren nach dem vorhergehenden Anspruch, **dadurch gekennzeichnet, dass** die Steuerung derart erfolgt, dass durch die zweite Nachricht derart auf die ersten Verkehrsteilnehmer eingewirkt wird, dass ein Halten vor einer, insbesondere je Manöver, definierten Stopplinie des Knotens erzwungen wird.

9. Verfahren nach dem vorhergehenden Anspruch, **dadurch gekennzeichnet, dass** zur Einwirkung, insbesondere mit der zweiten Nachricht, eine Datenübertragung eines als logische Wert "Boolean" ausgestalteten Steuersignals erfolgt.

10. Verfahren nach einem der vorhergehenden Ansprüche, **dadurch gekennzeichnet, dass** die Steuerung der Verkehrsteilnehmer derart erfolgt, dass Informationen von Signalgebern, insbesondere elektronische Schilder, Ampeln, Verkehrsleitsysteme, auf Grundlage der ersten Korrelation verändert werden.

11. Verfahren nach einem der vorhergehenden Ansprüche, **dadurch gekennzeichnet, dass** die erste Nachricht im Nahfeld, insbesondere dem Funksende-/Funkversorgungsbereich der Einrichtung der Verkehrsinfrastruktur, zumindest zeitweise periodisch wiederholt gesendet wird.

12. Verfahren nach dem vorhergehenden Anspruch, **dadurch gekennzeichnet, dass** die Zeitdauer der Periode, insbesondere auf 100 Millisekunden, festgelegt wird.

13. Verfahren nach einem der vorhergehenden Ansprüche, **dadurch gekennzeichnet, dass** die Nachricht derart versendet wird, dass sie eine das beabsichtigte Manöver, die Fahrtrichtung, Position, Dimension, Typ und/oder Geschwindigkeit des ersten Verkehrsteilnehmers, insbesondere Fahrzeugs, wiedergebende Information enthält.

14. Verfahren nach dem der vorhergehenden Anspruch, **dadurch gekennzeichnet, dass** die übermittelte Position auf Grundlage eines sattelitengestützten Navigationssystems, wie GPS, Galileo und/oder anderen nationalen und internationalen Navigationssatellitensystemen zur Positionsbestimmung, ermittelt wird.

15. Verfahren nach einem der vorhergehenden Ansprüche, **dadurch gekennzeichnet, dass** die Kommunikation gemäß einem dedizierten Kurzstreckenfunkkommunikationsstandard, insbesondere dem so genannten Dedicated Short Range Communication, "DSRC", erfolgt.

16. Verfahren nach einem der vorhergehenden Ansprüche, **dadurch gekennzeichnet, dass** die Kommunikation gemäß dem so genannten Wireless Access in Vehicular Environments, "WAVE"-Standard oder Derivaten hiervon erfolgt.

17. Verfahren nach einem der vorhergehenden Ansprüche, **dadurch gekennzeichnet, dass** die Kommunikation zumindest teilweise gemäß Standards IEEE 1609 und/oder ETSI Intelligent Transportation Systems, ITS oder seinen Derivaten erfolgt.

18. Verfahren nach einem der vorhergehenden Ansprüche, **dadurch gekennzeichnet, dass** die Kommunikation zumindest teilweise gemäß Standards IEEE 802.11 oder seinen Derivaten, insbesondere dem IEEE 802.11p, erfolgt.

19. Verfahren nach einem der vorhergehenden Ansprüche, bei dem die Kommunikation mit Verkehrsteilnehmern zumindest teilweise gemäß einem Mobilfunkstandard, wie dem GSM, UMTS, LTE oder Derivaten hiervon, erfolgt.

20. Verfahren nach einem der vorhergehenden Ansprüche, bei dem die Kommunikation mit Verkehrsteilnehmern zumindest teilweise gemäß dem europäischen Standard ETSI TC ITS, dem amerikanischen so genannten "Vehicle Safty Communications, VSC" Programm, dem Nachfolger hiervon "Connected Vehicle Communications Program" oder japanischen "Advanced Vehicle Safety Program, AVS" erfolgt.

21. Verfahren nach einem der vorhergehenden Ansprüche, bei dem die Kommunikation mit Verkehrsteilnehmern zumindest teilweise gemäß dem ISO Standard "continuous-air long and medium range", CALM, erfolgt.

22. Einrichtung der Verkehrsinfrastruktur (TL) zur Kommunikation auf Grundlage eines nach Art des ad-hoc zusammenwirkenden, insbesondere Drahtlos-, Kraftfahrzeugkommunikationssystems, wobei die Kommunikation zwischen Verkehrsteilnehmern (H1-H7) untereinander und/oder zwischen Verkehrsteilnehmern (H1-H7) und Verkehrsinfrastruktur (TL) erfolgt, wobei
a) die Einrichtung der Verkehrsinfrastruktur (TL) derart ausgestaltet ist, dass sie zum Empfang mindestens einer von einer ersten, einem ersten Verkehrsteilnehmer zugeordneten, Funk-Sende-/Funk-Empfangseinrichtung gesendeten ersten Nachricht, eine zweite Funk-Sende-/Funk-Empfangseinrichtung aufweist,
b) die Einrichtung der Verkehrsinfrastruktur (TL) mit Mitteln zum Ermitteln eines je am Knotenpunkt möglichem Manöver zumindest ein mit einer Wahrscheinlichkeit für die Ausführung des Manövers an dem Knotenpunkt korrelierenden Werts auf Grundlage der empfangenen Nachricht, aufweist,
c) die Einrichtung der Verkehrsinfrastruktur (TL) Mittel für eine Steuerung der Verkehrsteilnehmer auf Grundlage des korrelierenden Wertes, aufweist.
d) die Einrichtung der Verkehrsinfrastruktur (TL) mit Mitteln ausgestaltet ist, zum Bilden einer zweiten Nachricht,
e) die Einrichtung der Verkehrsinfrastruktur (TL) mit Mitteln ausgestaltet ist zur Übermittlung der zweiten Nachricht durch die zweite Funk-Sende-/Funk-Empfangseinrichtungen an die erste Funk-Sende-/FunkEmpfangseinrichtung,
**dadurch gekennzeichnet, dass**
als ein korrelierender Wert der korrelierende Wert für jedes mögliche Manöver als ein von einem ortsfesten Referenzpunkt, insbesondere Stopplinie am Knotenpunkt, ausgehendes Längenmaß berechnet wird.

23. Verkehrsteilnehmereinrichtung zur Kommunikation auf Grundlage eines nach Art des ad-hoc zusammenwirkenden, insbesondere Drahtlos-, Kraftfahrzeugkommunikationssystems, wobei die Kommunikation zwischen Verkehrsteilnehmern (H1-H7) untereinander und/oder zwischen Verkehrsteilnehmern (H1-H7) und Verkehrsinfrastruktur (TL) erfolgt, wobei die Verkehrsteilnehmereinrichtung derart ausgestaltet ist, dass
a) sie zum Senden mindestens einer ersten Nachricht mittels einer ihr zugeordneten ersten Funk-Sende-/Funk-Empfangseinrichtung an eine sich im Funkversorgungsbereich der ersten Funk-Sende-/Funk-Empfangseinrichtung befindende zweite, einem zweiten Verkehrsteilnehmer oder einer Einrichtung der Verkehrsinfrastruktur zugeordnete, befähigt ist,
b) das Versenden der ersten Nachricht derart erfolgt, dass auf Grundlage der empfangenen ersten Nachricht, eine erste Richtung einer Positionsveränderung des ersten Verkehrsteilnehmers ermittelt wird,
c) mit Mitteln zum Empfang einer im Falle einer Steuerung übermittelten zweiten Nachricht ausgestaltet ist, **dadurch gekennzeichnet, dass**
die Verkehrsteilnehmereinrichtung mit Mitteln zum Durchführen einer auf die, gemäß einem der vorhergehenden Verfahrensansprüche durchgeführten, Steuerung bezogenen Prozedur ausgestaltet ist.

## Claims

1. Method for communication based on an, in particular wireless, motor vehicle communication system interacting in an ad-hoc manner, wherein the communication is carried out between road users (H1-H7) among each other and/or between road users (H1-H7) and the traffic infrastructure (TL), wherein
a) in the near field of an intersection of traffic routes, in particular junctions or overlaps of traffic routes such as road or rail crossings, a radio transmission/radio reception device associated with a first road user continuously transmits a message to at least one radio transmission/radio reception device associated with a device of the traffic infrastructure, located in the radio coverage area of the first radio transmission/radio reception device,
b) the transmission of the message is carried out in such a way that, based on the received message, at least one value correlating with a probability for the execution of the maneuver at the intersection is ascertained per possible maneuver at the intersection,
c) a control of the road user is carried out based on the correlating value, **characterized in that**
as a correlating value, the correlating value for each possible maneuver is calculated as a linear measure based on a fixed-location reference point, in particular, a stop line at the intersection.

2. Method according to the preceding claim, **characterized in that** the correlating value for each first radio transmission/radio reception device is calculated as a first period of time for carrying out the maneuver.

3. Method according to either of the preceding claims, **characterized in that** a second time period is ascertained as a correlating value per maneuver, which is defined in such a way that it determines the interval per possible maneuver with which a phase of the execution of determined maneuver begins.

4. Method according to one of the preceding claims, **characterized in that** the first and/or second time period and/or the linear measure is transmitted as an integer value.

5. Method according to one of the preceding claims, **characterized in that** a U-turn, driving straight ahead, turning left and/or right, changing lanes, or the like are defined as possible maneuvers.

6. Method according to the preceding claim, **characterized in that** the possible maneuver is transmitted as a character string "string" or via an identification number.

7. Method according to one of the preceding claims, **characterized in that** the control is carried out in such a way that second messages are transmitted to the first radio transmission/radio reception devices which include at least the correlating value.

8. Method according to the preceding claim, **characterized in that** the control is carried out in such a way that the second message affects the first road users in such a way that a stop ahead of a stop line of the intersection, in particular defined per maneuver, is forced.

9. Method according to the preceding claim, **characterized in that** for influencing, in particular using the second message, a data transmission of a control signal designed as a "Boolean" logical value is preferably carried out.

10. Method according to one of the preceding claims, **characterized in that** the control of the road users is carried out in such a way that information from signal providers, in particular electronic signs, traffic lights, and traffic management systems, is changed based on the first correlation.

11. Method according to one of the preceding claims, **characterized in that** the first message is at least temporarily periodically transmitted repeatedly in the near field, in particular the radio transmission/radio coverage area of the device of the traffic infrastructure.

12. Method according to the preceding claim, **characterized in that** the duration of the period is established in particular at 100 milliseconds.

13. Method according to one of the preceding claims, **characterized in that** the message is transmitted in such a way that it contains a piece of information depicting the intended maneuver, the direction of travel, position, dimension, type, and/or speed of the first road user, in particular of the vehicle.

14. Method according to the preceding claim, **characterized in that** the transmitted position is ascertained based on a satellite-supported navigation system such as GPS, Galileo, and/or other national and international navigation satellite systems for position determination.

15. The method according to one of the preceding claims, **characterized in that** the communication is carried out according to a dedicated short-range radio communication standard, in particular the so-called Dedicated Short Range Communication, "DSRC".

16. Method according to one of the preceding claims, **characterized in that** the communication is carried out according to the so-called Wireless Access in Vehicular Environments (WAVE) standard, or derivatives thereof.

17. Method according to one of the preceding claims, **characterized in that** the communication is carried out at least partially according to the IEEE 1609 standard and/or ETSI Intelligent Transportation Systems (ITS) or its derivatives.

18. Method according to one of the preceding claims, **characterized in that** the communication is carried out at least partially according to the IEEE 802.11 standard or its derivatives, in particular IEEE 802.11p.

19. Method according to one of the preceding claims, in which the communication with road users is carried out at least partially according to a mobile radio standard such as GSM, UMTS, LTE, or derivatives thereof.

20. Method according to one of the preceding claims, in which the communication with road users is carried out at least partially according to the European ETSI TC ITS standard, the American so-called Vehicle Safety Communications (VSC) program, its successor, the Connected Vehicle Communications program, or the Japanese Advanced Vehicle Safety (AVS) program.

21. Method according to one of the preceding claims, in which the communication with road users is carried out at least partially according to the ISO Continuous-Air Long and Medium Range (CALM) standard.

22. Device of the traffic infrastructure (TL) for communication based on an, in particular wireless, motor vehicle communication system interacting in an ad-hoc manner, wherein the communication is carried out between road users (H1-H7) among each other and/or between road users (H1-H7) and the traffic infrastructure (TL), wherein
a) the device of the traffic infrastructure (TL) is designed in such a way that it includes a second radio transmission/radio reception device for receiving at least a first message transmitted by a first radio transmission/radio reception device associated with a first road user,
b) the device of the traffic infrastructure (TL) includes means for ascertaining, per possible maneuver at the intersection, at least one value correlating with a probability for the execution of the maneuver at the intersection based on the received message,
c) the device of the traffic infrastructure (TL) includes means for a control of the road user based on the correlating value,
d) the device of the traffic infrastructure (TL) is designed having means for forming a second message,
e) the device of the traffic infrastructure (TL) is designed having means for transmitting the second message to the first radio transmission/radio reception device via the second radio transmission/radio reception devices,
**characterized in that**
as a correlating value, the correlating value for each possible maneuver is calculated as a linear measure based on a fixed-location reference point, in particular, a stop line at the intersection.

23. Road user device for communication based on an, in particular wireless, motor vehicle communication system interacting in an ad-hoc manner, wherein the communication is carried out between road users (H1-H7) among each other and/or between road users (H1-H7) and the traffic infrastructure (TL), wherein the road user device is designed in such a way that
a) it is able to transmit at least a first message, by means of a first radio transmission/radio reception device associated with it, to a second one associated with a second road user or with a device of the traffic infrastructure, which is located in the radio coverage area of the first radio transmission/radio reception device,
b) the transmission of the first message is carried out in such a way that, based on the received first message, a first direction of a change in position of the first road user is ascertained,
c) it is designed having means for receiving a second message transmitted in the case of a control,
**characterized in that** the road user device is designed having means for carrying out a procedure related to the control carried out according to one of the preceding method claims.

## Revendications

1. Procédé de communication sur la base d'un système de communication d'un véhicule à moteur par interaction de type ad hoc, notamment sans fil, la communication ayant lieu entre des usagers de la route (H1-H7) entre eux et/ou entre des usagers de la route (H1-H7) et une infrastructure de circulation (TL),
a) dans le champ proche d'un croisement de voies de circulation, en particulier d'embouchures ou de recoupements de voies de circulation, tels que des carrefours de routes ou de voies ferrées, un dispositif radioémetteur / radiorécepteur associé à un premier usager de la route envoyant continuellement un message à au moins un deuxième dispositif radioémetteur / radiorécepteur situé dans la zone de desserte radio du premier dispositif radioémetteur / radiorécepteur et associé à un dispositif de l'infrastructure de circulation,
b) l'envoi du message ayant lieu de telle manière que, sur la base du message reçu, pour chaque manoeuvre possible au croisement, au moins une valeur corrélant avec une probabilité d'exécution de la manoeuvre au croisement est déterminée,
c) une gestion des usagers de la route ayant lieu sur la base de la valeur de corrélation,
**caractérisé en ce qu'**est calculée, en tant que valeur de corrélation, la valeur de corrélation pour chaque manoeuvre possible en tant que mesure de longueur partant d'un point de référence fixe, notamment une ligne d'arrêt au croisement.

2. Procédé selon la revendication précédente, **caractérisé en ce que** la valeur de corrélation est calculée, pour chaque premier dispositif radioémetteur / radiorécepteur, en tant que premier laps de temps pour l'exécution de la manoeuvre.

3. Procédé selon l'une des revendications précédentes, **caractérisé en ce qu'**est déterminé, en tant que valeur de corrélation pour chaque manoeuvre, un deuxième laps de temps qui est défini de telle sorte qu'il détermine, pour chaque manoeuvre possible, l'intervalle avec lequel commence une phase d'exécution d'une manoeuvre dédiée.

4. Procédé selon l'une des revendications précédentes, **caractérisé en ce que** le premier et/ou le deuxième laps de temps et/ou la mesure de longueur sont déterminés en tant que valeur entière.

5. Procédé selon l'une des revendications précédentes, **caractérisé en ce que** sont définis, en tant que manoeuvres possibles, une volte-face, un trajet en ligne droite, un virage à gauche et/ou à droite, un changement de voie de circulation ou autres similaires.

6. Procédé selon la revendication précédente, **caractérisé en ce que** la manoeuvre possible est transmise en tant que chaîne de caractères « string » ou par un numéro d'identification.

7. Procédé selon l'une des revendications précédentes, **caractérisé en ce que** la gestion a lieu de telle sorte que sont transmis aux premiers dispositifs radioémetteurs / radiorécepteurs des deuxièmes messages qui contiennent au moins la valeur de corrélation.

8. Procédé selon la revendication précédente, **caractérisé en ce que** la gestion a lieu de telle sorte que le deuxième message agit sur les premiers usagers de la route de manière à les obliger à s'arrêter devant une ligne d'arrêt du croisement définie en particulier pour chaque manoeuvre.

9. Procédé selon la revendication précédente, **caractérisé en ce qu'**a lieu, aux fins de l'action, en particulier par le deuxième message, une transmission de données d'un signal de commande se présentant sous la forme d'une valeur logique « Boolean ».

10. Procédé selon l'une des revendications précédentes, **caractérisé en ce que** la gestion des usagers de la route a lieu de telle sorte que des informations de générateurs de signaux, en particulier de panneaux, feux routiers, systèmes de régulation du trafic électroniques, sont modifiées sur la base de la première corrélation.

11. Procédé selon l'une des revendications précédentes, **caractérisé en ce que** le premier message dans le champ proche, en particulier dans la zone d'émission radio / de desserte radio du dispositif de l'infrastructure de circulation, est envoyé au moins temporairement avec répétition périodique.

12. Procédé selon la revendication précédente, **caractérisé en ce que** la durée de la période est fixée plus particulièrement à 100 millisecondes.

13. Procédé selon l'une des revendications précédentes, **caractérisé en ce que** le message est émis de manière telle qu'il contient une information reproduisant la manoeuvre envisagée, le sens du déplacement, la position, la dimension, le type et/ou la vitesse du premier usager de la route, en particulier du véhicule.

14. Procédé selon la revendication précédente, **caractérisé en ce que** la position transmise est déterminée sur la base d'un système de navigation assisté par satellite, tel que GPS, Galileo et/ou d'autres systèmes de navigation par satellite pour la détermination de la position.

15. Procédé selon l'une des revendications précédentes, **caractérisé en ce que** la communication a lieu selon une norme de communication radio courtes distances dédiée, et plus particulièrement ce qu'il est convenu d'appeler la Dedicated Short Range Communication, « DSRC ».

16. Procédé selon l'une des revendications précédentes, **caractérisé en ce que** la communication a lieu selon la norme dite Wireless Access in Vehicular Environments, norme « WAVE », ou des dérivées de cette norme.

17. Procédé selon l'une des revendications précédentes, **caractérisé en ce que** la communication a lieu au moins en partie selon des normes IEEE 1609 et/ou ETSI Intelligent Transportation Systems, ITS ou ses dérivées.

18. Procédé selon l'une des revendications précédentes, **caractérisé en ce que** la communication a lieu au moins en partie selon des normes IEEE 802.11 ou ses dérivées, et plus particulièrement selon IEEE 802.11p.

19. Procédé selon l'une des revendications précédentes, selon lequel la communication avec des usagers de la route a lieu au moins en partie selon une norme radio mobile, telle que GSM, UMTS, LTE ou des dérivées de ces normes.

20. Procédé selon l'une des revendications précédentes, selon lequel la communication avec des usagers de la route a lieu au moins en partie selon la norme européenne ETSI TC ITS, le programme américain appelé « Vehicle Safety Communications, VSC », son successeur « Connected Vehicle Communications Program » ou le programme japonais « Advanced Vehicle Safety Program, AVS ».

21. Procédé selon l'une des revendications précédentes, selon lequel la communication avec des usagers de la route a lieu au moins en partie selon la norme ISO « continuous-air long and medium range », CALM.

22. Dispositif de l'infrastructure de circulation (TL) pour la communication sur la base d'un système de communication d'un véhicule à moteur par interaction de type ad hoc, notamment sans fil, la communication ayant lieu entre des usagers de la route (H1-H7) entre eux et/ou entre des usagers de la route (H1-H7) et une infrastructure de circulation (TL),
a) le dispositif de l'infrastructure de circulation (TL) étant conçu de manière telle qu'il comporte un deuxième dispositif radioémetteur / radiorécepteur pour la réception d'au moins un premier message émis par un premier dispositif radioémetteur / radiorécepteur associé à un premier usager de la route,
b) le dispositif de l'infrastructure de circulation (TL) avec des moyens pour déterminer une manoeuvre possible respectivement au croisement présentant au moins une valeur, sur la base du message reçu, en corrélation avec une probabilité d'exécution de la manoeuvre au croisement,
c) le dispositif de l'infrastructure de circulation (TL) comportant des moyens de gestion des usagers de la route sur la base de la valeur de corrélation,
d) le dispositif de l'infrastructure de circulation (TL) étant réalisé avec des moyens pour la formation d'un deuxième message,
e) le dispositif de l'infrastructure de circulation (TL) étant réalisé avec des moyens pour la transmission du deuxième message au premier dispositif radioémetteur / radiorécepteur par le deuxième dispositif radioémetteur / radiorécepteur,
**caractérisé en ce qu'**est calculée, en tant que valeur de corrélation, la valeur de corrélation pour chaque manoeuvre possible en tant que mesure de longueur partant d'un point de référence fixe, notamment une ligne d'arrêt au croisement.

23. Dispositif d'usager de la route pour la communication sur la base d'un système de communication d'un véhicule à moteur par interaction de type ad hoc, notamment sans fil, la communication ayant lieu entre des usagers de la route (H1-H7) entre eux et/ou entre des usagers de la route (H1-H7) et une infrastructure de circulation (TL), le dispositif d'usager de la route étant conçu
a) de manière telle qu'il est capable d'envoyer au moins un premier message, au moyen d'un premier dispositif radioémetteur / radiorécepteur qui lui est associé, à un deuxième dispositif radioémetteur / radiorécepteur situé dans la zone de desserte radio du premier dispositif radioémetteur / radiorécepteur et associé à un deuxième usager de la route ou à un dispositif de l'infrastructure de circulation,
b) de manière telle que l'envoi du premier message a lieu de telle manière que, sur la base du premier message reçu, une première direction d'une modification de position du premier usager de la route est déterminée,
c) avec des moyens pour recevoir un deuxième message transmis en cas de gestion,
**caractérisé en ce que**
le dispositif d'usager de la route est conçu avec des moyens pour exécuter une procédure en rapport avec la gestion et exécutée selon l'une des revendications précédentes relatives au procédé.
